# EUROPÄISCHE PATENTSCHRIFT

(11) **EP 0 362 589 B1**
(45) Veröffentlichungstag und Bekanntmachung des Hinweises auf die Patenterteilung: **21.07.1993**
(21) Anmeldenummer: 89117018.5
(22) Anmeldetag: 14.09.1989
(51) Int. Cl.: B01D 46/34

(54) **Vorrichtung mit Schüttschichtfiltern zur Reinigung von Rohgas**
Device with moving layer filters for purifying crude gas
Dispositif avec des filtres à couche pour la purification de gaz brut

(30) Priorität: 04.10.1988 DE 3833661
(43) Veröffentlichungstag der Anmeldung: 11.04.1990
(73) Patentinhaber: RUHRKOHLE ÖL UND GAS GMBH, 46236 Bottrop (DE); HOECHST AKTIENGESELLSCHAFT, 65929 Frankfurt am Main (DE)
(72) Erfinder: Buchenau, Rolf, D-4600 Dortmund (DE); Hederer, Hartmut, Dr., D-4600 Dortmund 50 (DE); Victor, Dieter, D-4335 Waltrop (DE); Dürrfeld, Rainer, D-4300 Essen 15 (DE); Schleper, Bernhard, D-4200 Oberhausen 11 (DE); Hoffman, Harald, Dr., D-5203 Much (DE)

(56) Entgegenhaltungen:
- DE-A- 1 519 991
- DE-A- 3 440 145
- DE-C- 831 093
- US-A- 3 912 466

## Beschreibung

Die Erfindung richtet sich auf eine Vorrichtung mit Schüttschichtfiltern zur Reinigung von mit körnigen und/oder staubigen Feststoffpartikeln beladenem Rohgas mit einem Filtergehäuse mit Schüttguteinlaß und -auslaß, wobei die Schüttschichtfilter mit einer Rohgaszuleitung in offener Verbindung stehen und ihre Reingasabzüge in einer gemeinsamen Reingasabzugsleitung zusammengefaßt sind.

Um mit Feststoffpartikeln beladenes Rohgas zu reinigen, sind sogennante Schüttschichtfilter bekannt, wobei es hier bekannt ist, die Filterschicht in einer Neigung anzuordnen, die es ermöglicht, das Schüttgut der Filterschicht einfach auszutauschen, indem die Filterschicht über die geneigte Schräge abgezogen und durch nachrieselndes Schüttgut ersetzt wird. Solche Filter sind z.B. aus den Offenlegungsschriften 33 11 108 und 36 36 467 bekannt. Der mechanische Abwurf von verschmutzten Schüttschichten ist z.B. aus der DE-A- 21 17 088 bekannt, wobei bei den bekannten Filtern die Gesamtfilterfläche im wesentlichen in einer Ebene angeordnet ist.

Die bekannten Lösungen benötigen für ihre Filterfläche oder im Bereich ihrer Filter vergleichsweise viel Platz, sie sind im übrigen für unter Druck stehendes Rohgas nicht geeignet, da sie nicht in Druckgefäßen untergebracht werden können bzw. dann die Gehäuse so groß und schwer würden, daß sie wirtschaftlich nicht mehr herzustellen sind.

Aufgabe der Erfindung ist die Schaffung einer Lösung, mit der derartige Schüttschichtfilter auch für die Behandlung von Gasen unter Druck eingesetzt werden können, wobei die Filter leicht zu reinigen und leicht ein- und auszubauen bzw. zu warten sind.

Diese Aufgabe wird gemäß der Erfindung dadurch gelöst, daß die Schüttschichtfilter übereinander in einem druckfesten Gehäuse angeordnet sind, wobei ihre Filterflächen einseitig geneigt sind und daß das Filtergehäuse zweiteilig mit einem oberen und einem unteren Gehäuseteil ausgebildet ist, wobei die Schüttschichtfilter fest an einem Gehäuseteil angeordnet sind. Die Anordnung der Filter in mehreren Etagen übereinander ermöglicht eine vergleichsweise schlanke Bauweise, die den Einsatz von Druckgefäßen vereinfacht. Je nach Etagenanzahl kann die Filterfläche den jeweiligen Bedürfnissen angepaßt werden, es ist auch ein Wechselbetrieb insofern möglich, als bei kleineren Filterflächenbedarf einige der Filter ab- bzw. bei größer werdenden Bedarf zugeschaltet werden können.

Je nach Teilung des druckfesten Gehäuses kann bei einer Wartung das nicht mit den Einbauten versehene Gehäuseteil gelöst und abgehoben bzw. nach unten abgezogen werden, die am anderen Gehäuseteil befestigten Einbauten sind dann voll zugänglich, was deren Handhabbarkeit stark vereinfacht. Wie dies bei den flächig nebeneinander angeordneten Filterflächen durch die eingangs genannten Literaturstellen bereits bekannt ist, sieht die Erfindung auch bei dieser Gestaltung vor, daß Filterflächen der Schüttschichtfilter einseitig und gleichsinnig geneigt angeordnet sind, womit sich die aus dem Stand der Technik ergebenden Vorteile der Regeneration bzw. des Austausches des Schüttschichtgranulates, wie Sand od. dgl., stark vereinfachen läßt.

Weitere Ausgestaltungen der Erfindung ergeben sich aus den sonstigen Unteransprüchen, wobei es vorteilhaft ist, die Reingasabzugsleitungen in einem sich über die Höhe der übereinander angeordneten Schüttschichtfilter erstreckenden, geschlossenen seitlichen Schacht zusammenzufassen und die Rohgaszuleitung als auf der der Reingasabzugsleitung gegenüberliegenden Seite des Gehäuses angeordneter, sich über der Höhe der übereinander angeordneten Schüttschichtfilter erstreckender, zu den Filtern und zum Abwurfschacht hin offener, seitlicher Schacht auszubilden.

Vorteilhaft sind die Schüttguteinlässe aller Schüttschichtfilter in einem gemeinsamen Schüttgutschacht zusammengefaßt oder aber alternativ weist jeder Schüttschichtfilter einen eigenen Schüttguteinlaß auf. Umgekehrt ist der Schüttgutabwurfschacht allen Filtern gemeinsam zugeordnet und steht mit der Rohgaszuführleitung insgesamt in Verbindung, so daß sich ein Druckausgleich in allen Bereichen der Vorrichtung ergibt, die mit Rohgas in Verbindung stehen. Damit ergibt sich zwangsläufig ein Strömungsausgleich zwischen durchlässigen Filterflächen und zu reinigenden Filterflächen, was die Handhabbarkeit und die Steuerung der Vorrichtung in besonderem Maße erleichtert.

Es versteht sich von selbst, daß der Ablauf des Abwurfraumes mit einer Druckausgleichsschleuse versehen ist. Dies gilt in gleicher Weise für den Zulauf des Schüttgutes.

Weitere Merkmale, Einzelheiten und Vorteile der Erfindung ergeben sich aufgrund der nachfolgenden Beschreibung sowie anhand der Zeichnung. Diese zeigt in
- Fig. 1: einen Schnitt durch eine erfindungsgemäße Vorrichtung in vereinfachter Darstellung,
- Fig. 2: einen Längsschnitt etwa gemäß Linie II-II in Fig. 1 sowie in
- Fig. 3: einen Querschnitt gemäß Linie III-III in Fig. 1.

Die allgemein mit 1 bezeichnete Vorrichtung besteht im dargestellten Beispiel aus einem Druckgefäß 2 mit einem oberen Gehäuseteil 3 und einem unteren Gehäuseteil 4 mit Einbauten.

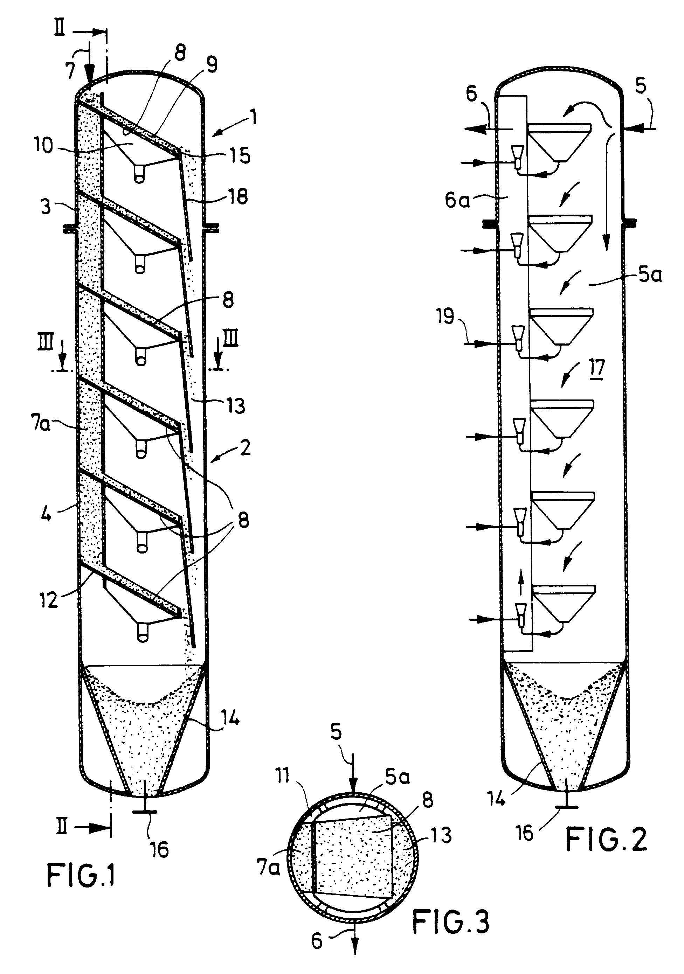

Das obere Gehäuseteil 3 ist mit einem Rohgaseintritt 5, einem Reingasaustritt 6, je durch Pfeile in Fig. 2 dargestellt, und einem Schüttguteinlaß (Pfeil 7 in Fig. 1) ausgerüstet.

Im Inneren sind Einbauten vorgesehen, und zwar eine Reihe von geneigten gasdurchlässigen Böden 8 mit einem Schütt- und Filtergutbelag 9 sowie darunter angeordneten Reingassammlern 10, die mit einem Reingasabzugsschacht 6a in Verbindung stehen.

Erkennbar sind die mit Schüttgut 9 beladenen Böden 8 mit einem Schüttguteinlaßschacht 7a verbunden, und zwar in der sich aus Fig. 3 ergebenden Weise, daß Schüttgutauffangflächen in den Aufgabeschacht 7a hereinragen unter Freilassung von Eckkanälen 11, die als Überlaufkanäle dienen. Lediglich die in der Gebrauchslage ganz unten liegende Filterfläche schließt den Aufgabekanal 7a vollständig ab. Dieser Bereich ist in Fig. 1 mit 12 bezeichnet.

Dem Schüttgutaufgabeschacht 7a ist nach dem Überlauf 15 ein Abwurfschacht 13 gegenüberliegend angeordnet, der mit dem Rohgaseinlaß 5 in Verbindung steht und unten in einem Auffangtrichter 14 mündet, der über eine nicht näher dargestellte Schleuseneinrichtung 16 entleert werden kann.

Die Wirkungsweise der Vorrichtung ist dabei die folgende:
Das über einen Stutzen 5 eintretende Rohgas beaufschlagt den allgemein mit 17 bezeichneten Filterrahmen (Fig. 2). Sind die Filter zugeschaltet, so strömt das Rohgas, die Schüttgutschicht 9 durchsetzend, über die Filterflächen 8 in die Sammeleinrichtungen 10 und von dort in den gemeinsamen Abzugsschacht 6a zum Abzugsstutzen 6.

Setzen sich einzelne Filter zu, so muß die obere Filterschicht ausgetauscht werden. Hierzu kann jeder einzelne Filter abgeschaltet werden. Dies geschieht derart, daß entweder der jeweilige Reingassammler 10 abgesperrt wird oder durch Hilfsmittel, wie z.B. Ejektordüsen 19, im Reingassammler ein Überdruck, d.h. eine Druckdifferenz, zur Rohgasseite hin aufgebaut wird.

Die Druckdifferenz sorgt dafür, daß die Schüttschicht mit geringer Gasgeschwindigkeit von unten nach oben durchströmt wird. Hierdurch erniedrigt sich der Schüttwinkel. Wenn der Schüttwinkel kleiner als die Neigung der Schüttung in der Kammer wird, kann sich die mit den abgeschiedenen Partikeln beladene Oberschicht der Schüttung nicht mehr halten und rutscht in den Kanal 13 ab.

Wird nunmehr das Filter wieder zugeschaltet, kehrt sich der Gasstrom wieder um und die Schüttung bleibt sofort in Ruhe, weil der Schüttwinkel wieder größer als die Neigung der Schüttung in der Kammer ist.

Es versteht sich von selbst, daß etwa Rüttel- oder Klopfeinrichtungen an den gasdurchlässigen Böden 8 vorgesehen sein können, um das Rieseln zu erleichtern, was allerdings nicht näher dargestellt ist. Verschmutztes Filtergranulat kann dann unten abgezogen werden.

Natürlich ist das beschriebene Ausführungsbeispiel der Erfindung noch in vielfacher Hinsicht abzuändern, ohne den Grundgedanken zu verlassen. So ist die Erfindung nicht auf die dargestellte Anzahl von Filterflächen beschränkt, ebenso nicht auf die gewählte Art der Gaszu- und -abfuhr bzw. Schüttgutzu- und -abfuhr.

## Patentansprüche

1. Vorrichtung mit Schüttschichtfiltern (8) zur Reinigung von mit körnigen und/oder staubigen Feststoffpartikeln beladenem Rohgas mit einem Filtergehäuse (2) mit Schüttguteinlaß (7) und -auslaß, wobei die Schüttschichtfilter mit einer Rohgaszuleitung (5,5a) in offener Verbindung stehen und ihre Reingasabzüge (10) in einer gemeinsamen Reingasabzugsleitung (6a) zusammengeführt sind,
dadurch gekennzeichnet,
daß die Schüttschichtfilter (8) übereinander in einem druckfesten Filtergehäuse (2) angeordnet sind, wobei ihre Filterflächen einseitig geneigt sind und daß das Filtergehäuse (2) zweiteilig mit einem oberen und einem unteren Gehäuseteil (3 bzw. 4) ausgebildet ist, wobei die Schüttschichtfilter (8) fest an einem Gehäuseteil angeordnet sind.

2. Vorrichtung nach Anspruch 1,
dadurch gekennzeichnet,
daß die Filterflächen (8) der Schüttschichtfilter einseitig und gleichsinnig geneigt angeordnet sind.

3. Vorrichtung nach Anspruch 1 oder einem der folgenden,
dadurch gekennzeichnet,
daß die Reingasabzugsleitung (6) als sich über der Höhe der übereinander angeordneten Schüttschichtfilter erstreckender, geschlossener seitlicher Schacht (6a) ausgebildet ist.

4. Vorrichtung nach Anspruch 1 oder einem der folgenden,
dadurch gekennzeichnet,
daß die Rohgaszuleitung (5) als auf der der Reingasabzugsleitung (6) gegenüberliegenden Seite des Gehäuses (2) angeordneter, sich über der Höhe der übereinander angeordneten Schüttschichtfilter erstreckender, zu den Filtern (8) und zum Abwurfschacht (13) hin offener, seitlicher Schacht (5a) ausgebildet ist.

5. Vorrichtung nach Anspruch 1 oder einen der folgenden,
dadurch gekennzeichnet,
daß die Schüttguteinlässe aller Schüttschichtfilter (8) zu einem gemeinsamen Schüttgutschacht (7a) zusammengefaßt sind, welcher auf der die Oberkanten der Filterflächen einschließenden Seite des Gehäuses gasdicht angeordnet ist, wobei im Bereich der Oberkante jeder Filterfläche jeweils ein Stauraum mit Auslauf ausgebildet ist.

6. Vorrichtung nach einem der Ansprüche 1 bis 5,
dadurch gekennzeichnet,
daß jeder Schüttschichtfilter (8) einen eigenen Schüttguteinlaß mit Stauraum aufweist.

7. Vorrichtung nach Anspruch 5 oder einem der folgenden,
dadurch gekennzeichnet,
daß auf der dem Schüttgutschacht (7a) gegenüberliegenden Seite des Gehäuses über der Höhe der Schüttschichtfilter ein im Bereich des Überlaufs (19) offener Abwurfschacht (13) für das Schüttgut ausgebildet ist, welcher in einen am Boden des Gehäuses angeordneten Abwurftrichter (14) mit Wassersperre mündet.

8. Vorrichtung nach Anspruch 1 oder einem der folgenden,
dadurch gekennzeichnet,
daß vom Überlauf (15) der Schüttschicht (8) ein schräg nach unten in Richtung des Abwurftrichters (14) verlaufendes Leitblech (18) angebracht ist, welches so lang ist, daß das untere Ende sich tiefer als die Überläufe (15) von einem oder mehreren der darunter liegenden Schüttschichtfiltern befindet.

## Claims

1. A device with granular-bed filters (8) for cleaning raw gas laden with granular and/or dust-like solid particles with a filter housing (2) with a bulk material inlet (7) and outlet, whereby the granular-bed filters have an open connection with a raw gas feed line (5, 5a) and their clean gas outlets (10) meet in a common clean gas discharge line (6a), characterised in that the granular-bed filters (8) are arranged above each other in a pressure-proof filter housing (2), their filter surfaces being inclined on one side, and that the filter housing (2) is composed of two parts with an upper and a lower housing section (3 and 4, respectively), the granular-bed filters (8) being attached to one housing section.

2. A device according to claim 1, characterised in that the filter surfaces (8) of the granular-bed filters are inclined on one side in the same direction.

3. A device according to claim 1 or any one of the claims following claim 1, characterised in that the clean gas discharge line (6) is designed as a closed side shaft (6a) stretching over the height of the granular-bed filters arranged above each other.

4. A device according to claim 1 or any one of the claims following claim 1, characterised in that the raw gas feed line (5) is designed as a side shaft (5a) which is arranged on the side of the housing (2) opposite the clean gas discharge line (6), stretches over the height of the granular-bed filters arranged above each other and which is open on the side facing the filters (8) and the discharge shaft (13).

5. A device according to claim 1 or any one of the claims following claim 1, characterised in that the bulk material inlets of all the granular-bed filters (8) are combined to form a common bulk material shaft (7a) which is arranged to be gas-tight on the side of the housing enclosing the upper edges of the filter surfaces, thus forming a build-up chamber with a discharge around the upper edge of each filter surface.

6. A device according to claims 1 to 5, characterised in that each granular-bed filter (8) has its own bulk material inlet with build-up chamber.

7. A device according to claim 5 or any one of the claims following claim 5, characterised in that on the side of the housing opposite the bulk material shaft (7a) over the height of the granular-bed filters a discharge shaft (13) which is open in the area of the overflow (19) is provided for the bulk material, said shaft running into a discharge hopper (14) which is arranged at the bottom of the housing and has a water seal.

8. A device according to claim 1 or any one of the claims following claim 1, characterised in that a deflector plate (18) inclined downwards in the direction of the discharge hopper (14) is arranged from the overflow (15) of the granular-bed (8), said plate being sufficiently long to ensure that its bottom end is lower than the overflows (15) of one or more of the granular-bed filters underneath.

## Revendications

1. Dispositif muni de filtres à couche (8) pour l'épuration d'un gaz brut chargé de particules solides sous forme de grains et/ou de poussière, comportant un boîtier de fibres (2) muni d'une entrée de produit en vrac (7) et d'une sortie de produit en vrac, les filtres à couche étant en communication ouverte avec une conduite d'amenée de gaz brut (5, 5a) et leurs évacuations de gaz épuré (10) étant rassemblées dans une conduite d'évacuation de gaz épuré commune (6a), caractérisé en ce que les filtres à couche (8) sont disposés les uns au-dessus des autres dans un boîtier de filtres (2) résistant à la pression, de manière que leurs surfaces filtrantes soient inclinées d'un côté, et en ce que boîtier de filtres (2) est en deux parties et comporte une partie supérieure et une partie inférieure (3 et 4), les filtres à couche (8) étant disposés de manière fixe sur une partie du boîtier.

2. Dispositif selon la revendication 1, caractérisé en ce que les surfaces filtrantes (8) des filtres à couche sont disposées d'un côté et sont inclinées dans le même sens.

3. Dispositif selon la revendication 1 ou l'une des suivantes, caractérisé en ce que la conduite d'évacuation de gaz épuré (6) est sous forme d'un puits latéral fermé (6a) qui s'étend sur la hauteur des filtres à couches superposés.

4. Dispositif selon la revendication 1 ou l'une des suivantes, caractérisé en ce que la conduite d'amenée de gaz brut (5) est sous forme d'un puits latéral (5a) situé du côté du boîtier (2) qui est opposé à la conduite d'évacuation de gaz épuré (6), qui s'étend sur la hauteur des filtres à couche superposés et qui est ouvert en direction des filtres (8) et du puits d'évacuation (13).

5. Dispositif selon la revendication 1 ou l'une des suivantes, caractérisé en ce que les entrées de produit en vrac de tous les filtres à couche (8) sont rassemblées en un puits de produit en vrac commun (7a) qui est disposé de manière étanche aux gaz sur le côté du boîtier qui entoure les bords supérieurs des surfaces filtrantes, tandis qu'une chambre d'accumulation munie d'une sortie est formée dans le domaine du bord supérieur de chaque surface filtrante.

6. Dispositif selon l'une des revendications 1 à 5, caractérisé en ce que chaque filtre à couche (8) comporte une entrée de produit en vrac séparée munie d'une chambre d'accumulation.

7. Dispositif selon la revendication 5 ou l'une des suivantes, caractérisé en ce que, sur le côté du boîtier qui est opposé au puits de produit en vrac (7a), il est prévu sur la hauteur des filtres à couche un puits d'évacuation (13) pour le produit en vrac qui est ouvert dans le domaine du trop-plein (15) et qui débouche dans une trémie d'évacuation (14) prévue au fond du boîtier et munie d'un barrage à eau.

8. Dispositif selon la revendication 1 ou l'une des suivantes, caractérisé en ce qu'une tôle de guidage (18) s'étend en biais vers le bas depuis le trop-plein (15) de la couche de produit en vrac (8) en direction de la trémie d'évacuation (14), tôle qui est de longueur telle que l'extrémité inférieure se trouve plus bas que les trop-pleins (15) d'un ou plusieurs des filtres à couche situés en dessous.
